# EUROPÄISCHE PATENTSCHRIFT

(11) **EP 1 080 042 B1**
(45) Veröffentlichungstag und Bekanntmachung des Hinweises auf die Patenterteilung: **06.08.2003**
(21) Anmeldenummer: 99950341.0
(22) Anmeldetag: 12.05.1999
(51) Int. Cl.: C02F 1/72

(54) **VERWENDUNG VON ERDALKALIPEROXIDEN ZUR IMMOBILISIERUNG VON PHOSPHAT IN WÄSSERN, BÖDEN, SEDIMENTEN UND/ODER SCHLÄMMEN**
USE OF ALKALINE EARTH PEROXIDES FOR IMMOBILISING PHOSPHATE IN WATERS, SOILS, SEDIMENTS AND/OR SLUDGES
USAGE DE PEROXIDES DE METAUX ALCALINO-TERRAUX POR L'IMMOBILISATION DE PHOSPHATE DANS EAUX, SOLS, SEDIMENTS ET/OU BOUES

(30) Priorität: 14.05.1998 DE 19821609; 06.11.1998 DE 19851345
(43) Veröffentlichungstag der Anmeldung: 07.03.2001
(73) Patentinhaber: Söll GmbH, 95028 Hof (DE)
(72) Erfinder: WILLUWEIT, Thomas, D-95028 Hof (DE); NOWICKI, Stefan, D-45130 Essen (DE); ULRICH, Kai-Uwe, D-09405 Zschopau (DE); JAKOBSON, Gerald, D-77770 Durbach (DE)
(74) Vertreter: Christophersen, Ruth
(86) Internationale Anmeldenummer: EP9903253
(87) Internationale Veröffentlichungsnummer: WO99058457

(56) Entgegenhaltungen:
- EP-A- 0 002 543
- EP-A- 0 505 752
- EP-A- 0 505 753

## Beschreibung

Die vorliegende Erfindung betrifft die Verwendung von Erdalkaliperoxiden zur Immobilisierung von Phosphat in Wässern, wie stehenden und fließenden Wässern und Abwässern, Böden, Sedimenten und/oder Schlämmen.

Gewässer, Böden, Sedimente und/oder Schlämme enthalten immer einen gewissen Anteil an organischen Materialien. Insbesondere bei Wässem, d.h. sowohl bei Gewässern als auch bei Abwässern, bestimmt u. a. der Anteil an organischen Verbindungen die Wasserqualität. Die organischen Materialien erhöhen zum einen die CSB- und BSB-Werte und zum anderen führen sie im Laufe der Zeit zur Bildung von Detritus, d.h. zur Verschlammung und im Extremfall zur Verlandung.

Hohe CSB- und BSB-Werte bedeuten, daß Materialien enthalten sind, die einen hohen Sauerstoffbedarf haben, und führen zu Sauerstoffmangel für die Mikororganismen und sonstige Lebewesen und schließlich zu deren Absterben. Das abgebaute Material liegt im Wasser als zusätzliches organisches Material, z. B. als Schwebeteilchen, vor, was eine weitere Verringerung der Wasserqualität mit sich bringt.

Um eine Verlandung von Gewässern, insbesondere von Teichen, zu vermeiden, müssen die gebildeten Schlämme in regelmäßigen Abständen mechanisch entfernt werden. Diese mechanische Entfernung der Schlämme setzt aber eine ausreichende Teilchengröße voraus. Schwebeteilchen lassen sich in der Regel nicht entfernen.

Auch wird durch die Verschmutzung von Wässem, Böden, Sedimenten und/oder Schlämmen die Aktivität der darin lebenden Mikroorganismen nachteilig beeinflußt, was wiederum zu einer Störung des natürlichen Gleichgewichts führt.

Ein weiteres Problem stellt insbesondere bei Binnengewässern der Phosphatgehalt dar, der für die Eutrophierung von Gewässern verantwortlich ist. Die Reduzierung der Phosphatkonzentration in eutrophierten Gewässern ist in aller Regel der Schlüssel zur erfolgreichen Sanierung, das heißt zur Verbesserung der Wassergüte und der Nutzungsmöglichkeiten. Deshalb wurden und werden schon seit mehr als zwei Dekaden mehr oder weniger erfolgreiche Anstrengungen unternommen, die Phosphatkonzentration insbesondere in Seen und im Ablauf von Kläranlagen zu senken. Etablierte Verfahren arbeiten unter Einsatz von Eisen- und Aluminiumsalzen als Fällmittel. Neuere Entwicklungen befassen sich mit der Optimierung der biologischen Phosphat-Elimination sowie mit der technischen Steuerung der biogenen Calcitpräzipitation und der Aufspülung von seeinternen Seekreidelagerstätten als Möglichkeiten der ökotechnologischen Gewässersanierung.

Die bekannten Verfahren zur Phosphatentfernung haben jedoch den Nachteil, daß die Fällung von Phosphat nur unvollständig erfolgt und zum Teil auch technisch aufwendig ist. Durch Zugabe von Al- oder Fe-Verbindungen werden darüberhinaus noch Aluminium- und Eisenionen in das Wasser eingebracht, was nicht immer positive Auswirkungen auf die Wasserqualität hat.

Aus dem Stand der Technik ist es bekannt, verschmutztes Wasser mit einem Gemisch aus Ca(OH)₂ und H₂O₂ zu behandeln. In derartigen Verfahren wird das vorhandene Phosphat als Calciumhydrogenphosphat ausgefällt (Brushit), dessen Löslichkeitsprodukt stark vom pH abhängig ist. Es bildet sich ein Gleichgewichtszustand mit den in der wässerigen Umgebung vorhandenen Komponenten. In einigen Fällen löst sich das Hydrogenphosphat sogar wieder auf. Ein solches Verfahren erlaubt keine nachhaltige mineralische Phosphatbindung in den behandelten Systemen und sorgt nicht für ein ausgeglichenes, für Wasserorganismen und Sedimentbewohner tolerierbares Sauerstoff-Milieu.

Der vorliegenden Erfindung liegt somit die Aufgabe zugrunde, ein Verfahren zur Aufbereitung von Wässern, Böden, Sedimenten und/oder Schlämmen zur Verfügung zu stellen, das es ermöglicht, organische Materialien, die als Schlämme oder Schwebstoffe vorliegen, abzubauen und so den Gehalt an Sauerstoff-verbrauchenden Substanzen zu reduzieren und gleichzeitig die Nitrifikation und die Enzymaktivität der vorliegenden Mikroorganismen zu verbessern.

Eine weitere Aufgabe bestand darin, ein Verfahren zur Verfügung zu stellen, das es ermöglicht, Phosphat aus Wässern, Böden, Sedimenten und/oder Schlämmen so zu entfernen, daß der Phosphatgehalt unter den ökologisch erforderlichen Höchstgehalt gesenkt wird und das Phosphat derart gebunden wird, daß es durch das Wasser nicht wieder durch Auflösen oder Auslaugen freigesetzt wird. Eine weitere Aufgabe ist es, den Gehalt weiterer in derartigen Systemen enthaltenen Schadstoffe gleichzeitig mit der Phosphat-Eliminierung zu reduzieren.

Gegenstand der vorliegenden Erfindung ist die Verwendung von Erdalkaliperoxiden zur Immobilisierung von Phosphat in Wässern, wie stehenden und fließenden Wässern und Abwässern, Böden, Sedimenten und/oder Schlämmen.

Überraschenderweise wurde festgestellt, daß durch die Verwendung von Erdalkaliperoxiden zur Aufbereitung von Wässern, Böden, Sedimenten und/oder Schlämmen der Gehalt an organischen Materialien, die als Schlämme oder Schwebstoffe vorliegen, stark verringert werden kann und auch die mikrobielle Abbauleistung gefördert wird. Es wird angenommen, daß bei der Zugabe von Erdalkaliperoxiden zu Wässern, Böden, Sedimenten und/oder Schlämmen eine Mineralisation des organischen Materials, d.h. eine Umwandlung von organischem Material in anorganische Substanz stattfindet. Gleichzeitig kann eine Immobilisierung von weiteren schädlichen Substanzen stattfinden, z. B. wenn diese mit anderen Feststoffen ausgefällt werden. Untersuchungen haben ergeben, daß auch Geruchs- und Geschmacksstoffe abgebaut werden und die Nitrifikation gefördert wird.

Bei der Behandlung von Phosphat-haltigen Wässern, Böden, Sedimenten und/oder Schlämmen mit Erdalkaliperoxiden kann eine so ausgezeichnete Phosphat-Elimination erreicht werden, daß die Phosphatkonzentration nach der Behandlung weit unter 30 µg P/L liegt. Die derzeit vorliegenden Untersuchungsergebnisse ergaben eine Abnahme der ortho-Phosphat-Konzentration von 3,26 bzw. 0,33 mg P/L auf 6 bzw. 3 µg P/L innerhalb sehr kurzer Zeit.

Femer wurde festgestellt, daß der pH-Wert des erfindungsgemäß behandelten Systems in den alkalischen Bereich steigt und elementarer Sauerstoff freigesetzt wird.Diese Wirkung ist in aquatischen Systemen generell positiv zu werten, da sie dem Sauerstoffdefizit bedingt durch sauerstoffzehrende Abbauprozesse entgegenwirkt.

Der Vorteil gegenüber der biologischen Phosphat-Elimination besteht in der zuverlässigen Elimination des Phosphats. Der Vorteil gegenüber anderen chemischen Phosphat-Eliminationsverfahren besteht in der hohen Wirksamkeit, das heißt in der starken Reduktion der ortho-Phosphat-Konzentration bei verhältnismäßig geringen Einsatz an erfindungsgemäß eingesetzem Erdalkaliperoxid. Das erfindungsgemäße Verfahren kann eine Algenmassenentwicklung verhindern und somit die damit verbundenen Gewässerprobleme vermeiden. Das Erdalkaliperoxid kann, in äquimolaren Mengen eingesetzt, Phosphat aus den Wässern entfernen. Außerdem eignet sich das Fällungsprodukt als mineralischer Düngemittel-Rohstoff und ist somit recyclingfähig.

Nach Einsatz des erfindungsgemäßen Verfahrens ist es nicht erforderlich ggf. gefälltes Material aus den Wässern bzw. Böden, Sedimenten und/oder Schlämmen zu entfernen, es kann im Wasser bzw. im Sediment belassen werden. Das gefällte Material besteht im wesentlichen aus mineralisierten Stoffen, auf denen auch die Wasserqualität beeinträchtigende Stoffe adsorbtiv gebunden oder aber in den Feststoff mit eingebaut sein können. Daher ist das vorliegende Verfahren insbesondere bei sog. Belassungskonzepten zur Wasseraufbereitung vorteilhaft anzuwenden.

Erdalkaliperoxide werden bisher u.a. als Zusatz in Brot, in Zahnpasta, in der Kosmetikindustrie und als Sauerstoffspender bei der Kompostierung verwendet. Die Erdalkaliperoxide werden aus wäßrigen Erdalkalihydroxid-Lösungen und H₂O₂ in einem speziellen Verfahren erhalten. Es ist bekannt, daß das einfache Vermischen der Hydroxid-Lösungen und H₂O₂ nicht zu den Erdalkaliperoxiden führt, sondern nur zur Zersetzung des eingesetzten H₂O₂.

Bei dem Einsatz dieses Verfahrens zur Abwasserreinigung besteht weiterhin der Vorteil, daß sich je nach Beschaffenheit des Abwassers dieses in kurzer Zeit in einem sehr einfachen einstufigen Prozeß reinigen läßt. Dabei ist von der apparativ-technischen Seite ein vergleichsweise geringfügiger und daher wenig kostenintensiver Aufwand zu betreiben.

Es wurde festgestellt, daß der erfindungsgemäße Einsatz von Erdalkaliperoxiden zur Behandlung von Gewässersedimenten, Schlämmen und Böden die Phosphate als schwerlösliche Verbindungen entfernt und nachhaltig bindet, so daß eine Remobilisierung oder Auslaugung der Phosphate bei Kontakt mit Wasser wirkungsvoll unterbunden wird.

Die bisherigen Beobachtungen lassen vermuten, ohne auf diese festgelegt zu werden, daß durch das Verfahren Phosphat in mineralischer Form als Hydroxylapatit gefällt und festgelegt wird.

Es wurde weiterhin festgestellt, daß die erfindungsgemäße Behandlung der Wässer bzw. Böden, Sedimenten und/oder Schlämmen durch das Ausfällen der Phosphate auch der Gehalt weiterer Schadstoffe, die die Wasserqualität beeinträchtigen, wie Schwermetallverbindungen und organische Verbindungen reduziert wird.

Es wird angenommen, daß Synergien auftreten, die sich aus der oxidativen Wirkung der erfindungsgemäß eingesetzten Peroxide, der pH-Wert-Erhöhung und der damit verbundenen Bildung schwerlöslicher Schwermetallspezies ergeben.

Unter Wässern werden im Sinne der vorliegenden Erfindung alle Wässer verstanden, wie z. B. Wasser in Teichen, Seen, Flüssen, See- und Süßwasseraquarien, Aufzuchtstationen für Fische und andere Seetiere, Wasser aus Kläranlagen und andere Wasseraufbereitungsanlagen etc. sowie beliebige Abwasser einschließlich Industrieabwässer, wobei die voranstehenden Wässer auch Böden, Sedimente und/oder Schlämme sowie Sink- und Schwebstoffe enthalten können. Böden im Sinne der vorliegenden Erfindung sind sowohl Unter Sedimenten werden im Sinne der vorliegenden Erfindung in Wässern befindliche Festkörper, wie z. B. in Teichen, Seen und Flüssen, verstanden. Die Schlämme können beispielsweise aus Kläranlagen, Abwasserfilter etc. stammen.

Geeignete Erdalkaliperoxide sind z.B. die Peroxide von Magnesium, Calcium, Barium, Strontium und deren Gemische, wobei Calcium und Magnesium oder deren Gemische bevorzugt eingesetzt werden. Besonders bevorzugt sind Calciumperoxide, wobei Calcium durch Magnesium-, Strontium- oder Bariumperoxid, in Mengenanteilen von 0,02 Gew.-% bis 50 Gew.-%, vorzugsweise bis 30 Gew.-%, bezogen auf CaO_{2,} ersetzt werden kann. In handelsüblichen Produkten liegt das Erdalkaliperoxid im Gemisch mit dem entsprechenden Carbonat und Hydroxid vor.

Besonders gute Ergebnisse werden erhalten, wenn die Erdalkaliperoxide im Gemisch mit Alkalicarbonat-Peroxyhydrate eingesetzt werden. Von Alkalicarbonat-Peroxyhydraten ist beim Einsatz in Wasser eine mikrobiozide Wirkung bekannt.

Die Alkalicarbonat-Peroxyhydrate sind Anlagerungsprodukte von Alkalicarbonaten mit H₂O₂, Me₂CO₃.xH₂O₂, beispielsweise 2Me₂CO₃.3H₂O₂. Sie werden auch als Alkalipercarbonate bezeichnet und sind im Handel erhältlich. Aus ökonomisch wie auch ökologischer Sicht hat sich Natriumcarbonat-Peroxyhydrat als besonders geeignet erwiesen.

Die Erdalkaliperoxide und Alkalicarbonat-Peroxyhydrate werden vorzugsweise in Mengenverhältnissen von 1 : 1 bis 1 : 0,03 eingesetzt.

Eine Steigerung der Phosphat-Fällung kann erreicht werden, wenn man dem zu behandelnden System Impfkristalle aus Apatit oder mäßig wasserlöslichen Phospathverbindungen zusetzt.

Zur Durchführung des erfindungsgemäßen Verfahrens werden die verwendeten Substanzen, d. h. Erdalkaliperoxide und ggf. Alkalicarbonat-Peroxyhydrate sowie weitere fakultative Bestandteile, in einer Menge von 30 bis 300 g/qm Wasser aufgebracht. Bei der Sediment-, Schlamm- oder Bodenbehandlung kann wegen der üblicherweise höheren Menge an oxidierbaren Stoffen der Zusatz der erfindungsgemäß verwendenten Substanzen ein Vielfaches der Wässern zuzusetzenden Menge betragen.

Mit dem neuen Verfahren ist es darüber hinaus möglich, Schwermetallgehalte sowie die Gehalte an störenden Anionen, z. B. PO₄³⁻, NO₂⁻, SO₃²⁻, S²⁻, zu senken. Beim Einsatz zur Aufbereitung von Industrieabwässern können in einigen Fällen sogar die derzeit gültigen amtlichen Grenzwerte (Indirekteinleiterverordnung) erreicht werden, was eine direkte Einleitung der Abwässer den Vorfluter möglich macht.

Die erfindungsgemäß eingesetzten Peroxide und weitere ggf. eingesetzte Komponenten können den zu behandelnden Systemen entweder als Einzelsubstanzen oder im Gemisch mit anderen als Festkörper, wäßrige Lösungen oder Aufschlämmungen zugesetzt werden. Als derartige Festkörper kommen insbesondere Silikate, wie Schichtsilikate oder Gerüstsilikate, vorzugsweise aus der Gruppe der Zeolithe und Bentonite, in Betracht. Aus anwendungstechnischen Gründen ist es besonders zweckmäßig, die in fester Form vorliegenden Materialien zu kompaktieren und z. B. als Granulate, Pellets oder Tabletten einzusetzen.

Bei der Phosphat-Elimination aus Wässern hat es sich auch als vorteilhaft erwiesen, die Wässer durch eine Vorrichtung zu leiten, die die erfindungsgemäßen Komponenten ggf. auf Trägermaterialien aufgebracht, enthält. Auch das Leiten der Wässer über ein Festbett, daß die erfindungsgemäß eingesetzten Komponenten enthält, ist möglich, wobei eine Kontaktzeit gewährleistet sein muß, daß die Reaktion zwischen dem Phosphat und dem Peroxid erfolgen kann.

In Abhängigkeit von der Wasserqualität und Sedimentqualität, wie Carbonatgehalt, pH-Wert, etc., kann es angebracht sein, noch weitere Verbindungen zuzusetzen, die die Wasser- bzw. Sedimentqualität erhöhen. Als solche Verbindungen können beispielsweise genannt werden Ca(OH)₂, CaO, CaCO₃, CaCl₂, Ca(NO₃)₂, CaSO₄, Ca₂SiO₄, CaF₂, CaI₂, CaBr₂, Ca₃(PO₄)₂, Ca₄H(PO₄)₃, Ca₂P₂O₇, Ca₄P₂O₉, CaHPO₄, Ca (PO₃)₃, Ca(H₂PO₄)₂ und die Apatite des Calciums sowie Gemische der voranstehenden. Je nach Beschaffenheit des Rohwassers kann es erforderlich sein, das Wasser unter Verwendung von Alkalimetall- oder Erdalkalimetallsalzen, insbesondere Oxide, Hydroxide, Carbonate oder Hydrogencarbonate zu behandeln, um den pH-Wert zu erhöhen.

In einer bevorzugten Ausführungsform werden die erfindungsgemäß eingesetzten Verbindungen in Kombination mit einem Gemisch aus CaCO₃, CaCl₂ und/oder Ca(NO₃)₂ und ggf. Magnesiumsalze, sowie NaHCO₃ und ggf. KHCO₃, wobei CaCO₃ und CaCl₂ und/oder Ca(NO₃)₂ sowie ggf. Magnesiumsalze in einem Stoffmengenverhältnis von 0,01 : 1 bis 2 : 1 und CaCl₂ und/oder Ca(NO₃)₂ sowie ggf. Magnesiumsalze und NaHCO₃ sowie ggf. KHCO₃ in einem Stoffmengenverhältnis von 1 : 3 bis 2 : 1 vorliegen. Eine solche Mischung und ihre Eignung zur Aufbereitung von Wässern und Sedimenten ist in der europäischen Patentanmeldung 737 169 beschrieben.

Die Gegenwart von Salzen, beispielsweise des Eisens und Aluminiums, sowie von Oxiden, Hydroxiden, Hydrogencarbonaten, Carbonaten, Sulfaten, Nitraten, Chlorid und Fluorid kann die Wirksamkeit des Verfahrens fördern: insbesondere durch die Dotierung der Metalle Eisen und Aluminium sowie von Fluorid, z.B. in Form von NaF, KF oder MgF₂, oder anderen lonen mit geringem lonenradius, wobei diese Verbindungen in einer solchen Menge eingesetzt werden, daß die Wasserqualität nicht nachteilig beeinflußt wird.

Das erfindungsgemäße Verfahren kann eingesetzt werden zur Aufbereitung von Böden, Gewässersedimenten, Schlämmen und Wasser/Abwasser in offenen und geschlossenen wasserhaltigen Systemen, Gewässern wie Meerwasser, Brackwasser und Süßwasser, z. B. in Talsperren, künstlichen oder natürlichen Seen, Bade- oder Fischereigewässem, Zierteichen und der Aquaristik. Femer in Prozeßwässem, z.B. Kläranlagen, Abwasseraufbereitungsanlagen, Recyclinganlagen, Kühlwasseranlagen und Wärmetauscheranlagen, Abwässer chemischer Produktionsanlagen, oder bei der Behandlung von Wasser, das durch Zersetzungs- und Kondensationsprozesse (z.B. Deponiesickerwasser oder Kondensat aus thermischen Abfallverwertungsanlagen) oder durch Auslaugungsprozesse entsteht (z. B. Wasser das durch kontaminierte Böden, Gewässersedimente oder Schlämme sickert).

Die Durchführung des erfindungsgemäßen Verfahrens kann erfolgen durch direkte Dosierung der festen Komponenten von Hand, oder durch technische Einrichtungen oder Hilfsmittel wie Dosiersysteme. Das Material kann direkt in das zu behandelnde Wasser dosiert werden, oder auch dadurch, daß Behältnisse das Material in fester Form enthalten und vom zu behandelnden Wasser durchströmt werden, wie zum Beispiel Filterpatronen, Fest- oder Wirbelbettreaktoren.

So zeigten Versuche mit stark belasteten Abwässern aus Kunstststoffrecycling-Betrieben, daß sich, nach Abtrennung der Fällungsprodukte, die Qualität des Prozeßwassers so stark verbessert hatte, daß in einigen Fällen eine Einleitung des behandelten Wassers in den Vorfluter nach den Kriterien der Indirekteinleiter- bzw. Direkteinleiterverordnung möglich war.
In weiteren Applikationen werden die erfindungsgemäß eingesetzten Komponenten durch Zwangsmischer, Erdfräsen oder andere mechanische Mischer in Böden, Schlämme oder Gewässersedimente eingearbeitet.

Die gefällten Phosphate lassen sich, sofern es ihr Schadstoffgehalt zuläßt, als Rohstoffe z. B. als Düngemittel, Kompostierhilfen, oder im Erd- und Landbau wiederverwenden.

Der erfindungsgemäße Einsatz der Erdalkaliperoxide erhöht neben der Enzymaktivität vorhandener Organismen auch deren mikrobiologische Aktivität allgemein, was zu einem beschleunigten und erhöhten Mineralisationsprozeß führt, was durch eine Abnahme des Glühverlustes des mineralisierten Substrats beobachtbar ist.

### Beispiele

### Vergleich der Stabilität von CaO₂ und eines Gemisches aus Ca(OH)₂ und H₂O₂

1. In ein 1 I Becherglas wurden 500 ml dest. Wasser vorgelegt und 5 g IXPER 75C (CaO₂, Handelsprodukt der Solvay Interox, Hannover) hinzugegeben. Sofort nach dem Mischen wurde die erste Probe über ein Schwarzbandfilter filtriert und im Trockenchrank bei 70°C über Nacht getrocknet. Von dem getrockneten Rückstand wurde mit KMnO₄ (0,02mol/l) der CaO₂ und der Aktivsauerstoff-Gehalt bestimmt (0-Wert) (Doppelbestimmung).
Die Ergebnisse sind in der folgenden Tabelle dargestellt:

| | Menge CaO₂ [Gew.-%] | Aktivsauerstoffgehalt [%] |
|---|---|---|
| Ausgangswert | 74,4 | 16,5 |
| 0-Wert | 73,1 | 16,2 |
| nach 1 Woche | 72,6 | 16,1 |
| 2 Wochen | 71,3 | 15,9 |
| 3 Wochen | 69,7 | 15,5 |
| 4 Wochen | 69,4 | 15,4 |
| 5 Wochen | 69,2 | 15,4 |
| 6 Wochen | 67,1 | 14,9 |
| 7 Wochen | 66,1 | 14,7 |

2. 5 g eines Gemischs aus 50 Gew.-% Ca(OH)₂ und 50 Gew.-% H₂O₂ wurde in 500 ml Wasser gegeben. Bereits nach 1Tag war H₂O₂ analytisch nicht mehr nachweisbar.

### Wirkung von CaO₂ auf Wässer und Sedimente

Talsperrensediment einschl. Überstandwasser wurde zunächst durch Begasung mit Argon sauerstofffrei gemacht und anschließend mit IXPER 75C (Versuch 1) und IXPER 60C (Versuch 2) [handelsübliche CaO₂-Qualitäten, erhältlich von der Solvay Interox, Hannover) in einer Menge von 177 g/m³ versetzt.

Die mikrobielle Aktivität und der Glühverlust als Maß für den organischen Gehalt wurden bestimmt.

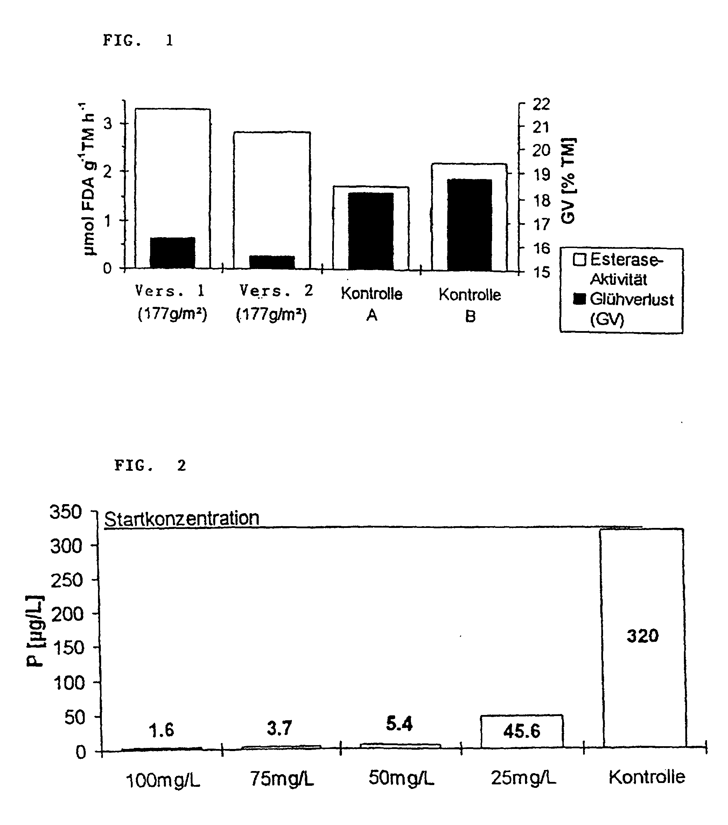

Die Versuchsergebnisse und die Ergebnisse der Kontrollversuche sind in dem Diagramm in Fig. 1 wiedergegeben. Es wird deutlich, daß die erfindungsgemäß behandelten Proben eine deutliche höhere Esteraseaktivität zeigen. Auch war der Glühverlust, der ein Maß für den Gehalt an organischer Substanz in der Probe ist, deutlich geringer.

### Entfernung von Phosphat

Wasser mit einem Phosphat-Gehalt von 320 µg/l wurde mit unterschiedlichen Mengen CaO₂ (IXPER 75C) behandelt. Die Phosphatkonzentration nach der Behandlung wurde jeweils bestimmt. In Fig. 2 sind die Versuchsergebnisse wiedergegeben. Sie zeigen die deutliche Abnahme des Phosphat-Gehalts.

## Patentansprüche

1. Verwendung von Erdalkaliperoxiden zur Immobilisierung von Phosphat in Wässern, wie stehenden und fließenden Wässern und Abwässern, Böden, Sedimenten und/oder Schlämmen.

2. Verwendung nach Anspruch 1, **dadurch gekennzeichnet, daß** als Erdalkaliperoxide die Peroxide von Calcium, Magnesium oder deren Gemische eingesetzt werden.

3. Verwendung nach Anspruch 1 oder 2, **dadurch gekennzeichnet, daß** die Peroxide in Kombination mit Erdalkalicarbonaten eingesetzt werden.

4. Verwendung nach einem der Ansprüche 1 bis 3, **dadurch gekennzeichnet, daß** zusätzlich Alkalicarbonat-Peroxyhydrate, insbesondere Na₂CO₃.xH₂O₂, vorzugsweise 2Na₂CO₃.3H₂O₂, oder ein Gemisch aus Na₂CO₃ und H₂O₂, eingesetzt werden.

5. Verwendung nach einem der Ansprüche 1 bis 4, **dadurch gekennzeichnet, daß** die Erdalkaliperoxide in Kombination mit einem Gemisch aus CaCO₃, CaCl₂ und/oder Ca(NO₃)₂ und ggf. Magnesiumsalze, sowie NaHCO₃ und ggf. KHCO₃, wobei CaCO₃ und CaCl₂ und/oder Ca(NO₃)₂ sowie ggf. Magnesiumsalze in einem Stoffmengenverhältnis von 0,01 : 1 bis 2 : 1 und CaCl₂ und/oder Ca(NO₃)₂ sowie ggf. Magnesiumsalze und NaHCO₃ sowie ggf. KHCO₃ in einem Stoffmengenverhältnis von 1 : 3 bis 2 : 1 vorliegen, eingesetzt werden.

6. Verwendung nach einem der Ansprüche 1 bis 5, **dadurch gekennzeichnet, daß** zusätzlich Silikate, wie Schichtsilikate oder Gerüstsilikate, vorzugsweise aus der Gruppe der Zeolithe und Bentonite, eingesetzt werden.

7. Verwendung nach einem der Ansprüche 1 bis 6, **dadurch gekennzeichnet, daß** zusätzlich Eisen- oder Aluminiumionen, Fluoridionen oder andere lonen mit geringem lonenradius zugesetzt werden.

8. Verwendung nach einem der Ansprüche 1 bis 7, **dadurch gekennzeichnet, daß** die Komponenten direkt, in fester Form oder als wäßrige Aufschlämmung oder Lösung, per Hand oder durch geeignete Dosiersysteme dem zu behandelnden Wasser zugesetzt werden.

9. Verwendung nach einem der Ansprüche 1 bis 8, **dadurch gekennzeichnet, daß** die Komponenten in fester Form vorliegen und von dem zu behandelnden Wasser umströmt werden.

10. Verwendung nach einem der Ansprüche 1 bis 9, **dadurch gekennzeichnet, daß** die aktiven Komponenten durch Zwangsmischer, Erdfräsen oder andere mechanische Mischer in Böden, Schlämme oder Seewässersedimente eingearbeitet werden.

11. Verwendung nach einem der Ansprüche 1 bis 10, **dadurch gekennzeichnet, daß** die gefällten Phosphate als Düngemittel, Kompostierhilfen oder im Erd- und Landbau eingesetzt werden.

## Claims

1. Use of alkaline earth metal peroxides for immobilizing phosphate in waters, such as standing and flowing waters and wastewaters, soils, sediments and/or silts.

2. Use according to Claim 1, **characterized in that** the alkaline earth metal peroxides used are the peroxides of calcium, magnesium or mixtures thereof.

3. Use according to Claim 1 or 2, **characterized in that** the peroxides are used in combination with alkaline earth metal carbonates.

4. Use according to one of Claims 1 to 3, **characterized in that** alkali metal carbonate peroxyhydrates, in particular Na₂CO₃.xH₂O₂, preferably 2Na₂CO₃.3H₂O₂, or a mixture of Na₂CO₃ and H₂O₂, are used additionally.

5. Use according to one of Claims 1 to 4, **characterized in that** the alkaline earth metal peroxides are used in combination with a mixture of CaCO₃, CaCl₂ and/or Ca(NO₃)₂ and optionally magnesium salts, and also NaHCO₃ and optionally KHCO₃, where CaCO₃ and CaCl₂ and/or Ca(NO₃)₂ and also any magnesium salts are in a quantity ratio of 0.01:1 to 2:1, and CaCl₂ and/or Ca(NO₃)₂ and also any magnesium salts and NaHCO₃ and any KHCO₃ are in a quantity ratio of 1:3 to 2:1.

6. Use according to one of Claims 1 to 5, **characterized in that** silicates, such as layered silicates or framework silicates, preferably from the group of the zeolites and the bentonites, are used additionally.

7. Use according to one of Claims 1 to 6, **characterized in that** iron or aluminium ions, fluoride ions or other ions having a small ionic radius are used additionally.

8. Use according to one of Claims 1 to 7, **characterized in that** the components are added directly to the water to be treated in solid form or as an aqueous slurry or solution, by hand or by suitable metering systems.

9. Use according to one of Claims 1 to 8, **characterized in that** the components are in solid form and are flowed around by the water to be treated.

10. Use according to one of Claims 1 to 9, **characterized in that** the active components are incorporated by positive mixers, rotary hoes or other mechanical mixers in soils, silts or lakewater sediments.

11. Use according to one of Claims 1 to 10, **characterized in that** the precipitated phosphates are used as fertilizers, composting aids or in earthworks and agriculture.

## Revendications

1. Utilisation de peroxydes de base alcalino-terreuse pour l'immobilisation de phosphate dans des eaux - telles que des eaux dormantes, des eaux vives et des eaux usées - des sols, des sédiments et/ou des boues.

2. Utilisation selon la revendication 1, **caractérisée en ce que** l'on emploie, comme peroxydes de base alcalino-terreuse, des peroxydes de calcium ou de magnésium ou encore un mélange des deux.

3. Utilisation selon la revendication 1 ou 2, **caractérisée en ce que** les peroxydes sont employés en combinaison avec des carbonates de base alcalino-terreuse.

4. Utilisation selon l'une des revendications 1 à 3, **caractérisée en ce que,** de plus, on emploie des hydrates de peroxyde de carbonate d'alcali, notamment du Na₂CO₃.xH₂O₂, de préférence du 2Na₂CO₃.3H₂O₂, ou un mélange de Na₂CO₃ et de H₂O₂.

5. Utilisation selon l'une des revendications 1 à 4, **caractérisée en ce que** l'on emploie les peroxydes de base alcalino-terreuse en combinaison avec un mélange de CaCO₃, de CaCl₂ et/ou de Ca(NO₃)₂, et éventuellement des sels de magnésium, ainsi que du NaHCO₃ et éventuellement du KHCO₃, le CaCO₃ et le CaCl₂ et/ou le Ca(NO₃)₂ ainsi que les sels de magnésium éventuels étant présents dans un rapport molaire de 0,01 pour 1 à 2 pour 1 et le CaCl₂ et/ou le Ca(NO₃)₂ ainsi que les sels de magnésium éventuels et le NaHCO₃ ainsi le KHCO₃ éventuel étant présents dans un rapport molaire de 1 pour 3 à 2 pour 1.

6. Utilisation selon l'une des revendications 1 à 5, **caractérisée en ce que,** de plus, on emploie des silicates, tels que les phyllosilicates ou les tectosilicates, qui appartiennent de préférence aux groupes des zéolithes et des bentonites.

7. Utilisation selon l'une des revendications 1 à 6, **caractérisée en ce que,** de plus, on ajoute des ions fer ou des ions aluminium, des ions fluorure ou d'autres ions à petit rayon.

8. Utilisation selon l'une des revendications 1 à 7, **caractérisée en ce que** les composants sont directement ajoutés à l'eau à traiter, soit sous forme solide soit sous forme de suspension ou de solution aqueuse, à la main ou à l'aide de systèmes de dosage appropriés.

9. Utilisation selon l'une des revendications 1 à 8, **caractérisée en ce que** les composants se présentent sous forme solide et **en ce que** l'on fait passer dessus l'eau à traiter.

10. Utilisation selon l'une des revendications 1 à 9, **caractérisée en ce que** les composants actifs sont insérés dans les sols, les boues ou les sédiments subaquatiques au moyen de mélangeurs à action forcée, de fraises de terrassement ou d'autres mélangeurs mécaniques.

11. Utilisation selon l'une des revendications 1 à 10, **caractérisée en ce que** les phosphates précipités sont employés comme engrais, comme auxiliaires de compostage ou dans les travaux de terrassement et dans l'agriculture.
